# EUROPÄISCHE PATENTANMELDUNG

(11) **EP 4 847 954 A1**
(43) Veröffentlichungstag der Anmeldung: **02.12.2026**
(21) Anmeldenummer: 26170836.6
(22) Anmeldetag: 07.04.2026
(51) Int. Cl.: G01S 7/497, G01S 7/40, G01S 13/34, G01S 13/58, G01S 17/34, G01S 17/931, G01S 13/931

(54) **KALIBRIERUNG EINES SENSORS ZUR VERMESSUNG DER UMGEBUNG EINES SCHIENENFAHRZEUGS UNTER AUSNUTZUNG DES DOPPLEREFFEKTS**

(30) Priorität: 26.05.2025 DE 102025120531
(71) Anmelder: Siemens Mobility GmbH, 80997 München (DE)
(72) Erfinder: Fuchs, Stefan, 12489 Berlin (DE)
(74) Vertreter: Siemens Patent Attorneys

(57) **Zusammenfassung**

Es wird ein Verfahren zur Kalibrierung eines Distanzsensors zur Detektion der Umgebung eines Schienenfahrzeugs beschrieben. Bei dem Verfahren erfolgt ein automatisiertes Erfassen von Sensordaten (SD) von mindestens drei nicht kollinear angeordneten Objekten in einer Umgebung (U) eines Schienenfahrzeugs (2) durch einen von dem Schienenfahrzeug (2) mitgeführten Distanzsensor (3). Weiterhin werden mindestens drei Radialgeschwindigkeiten (vᵣ) des Distanzsensors (3) jeweils relativ zu den mindestens drei nicht kollinear angeordneten Objekten auf Basis der erfassten Sensordaten (SD) und auf Basis des Doppler-Effekts ermittelt. Auf Basis der mindestens drei ermittelten Radialgeschwindigkeiten des Distanzsensors (3) wird eine vektorielle Eigengeschwindigkeit des Distanzsensors (3) ermittelt. Auf Basis der ermittelten vektoriellen Eigengeschwindigkeit (v^{S}) des Distanzsensors (3) und einer vorbekannten vektoriellen Eigengeschwindigkeit (v) des Schienenfahrzeugs (2) wird eine aktuelle Orientierung (²T³) des Distanzsensors (3) relativ zu einer Bewegungsrichtung (R) des Schienenfahrzeugs (2) ermittelt. Die ermittelte aktuelle Orientierung (²T³) des Distanzsensors (3) wird mit einer Soll-Orientierung (TS) des Distanzsensors (3) des Schienenfahrzeugs verglichen. Schließlich wird eine Dejustierung des Distanzsensors (3) für den Fall ermittelt, dass die ermittelte aktuelle Orientierung (²T³) des Distanzsensors (3) von der vorbekannten Soll-Orientierung (TS) des Distanzsensors (3) des Schienenfahrzeugs (2) abweicht. Es wird auch eine Kalibrationseinrichtung (40) beschrieben.

## Beschreibung

Die Erfindung betrifft ein Verfahren zur Kalibrierung eines Distanzsensors zur Vermessung der Umgebung eines Schienenfahrzeugs. Weiterhin betrifft die Erfindung ein Verfahren zur Detektion eines Objekts. Die Erfindung bezieht sich auch auf eine Kalibrationseinrichtung. Außerdem bezieht sich die Erfindung auf eine Objektdetektionseinrichtung. Zudem betrifft die Erfindung ein Schienenfahrzeug mit einer solchen Objektdetektionseinrichtung.

Automatisierte und fahrerlose Zugsysteme sind zur Vermessung und Wahrnehmung der Umgebung erforderlich und daher auch mit einer Vielzahl von Sensoren ausgestattet. Typischerweise umfassen diese Systeme einen oder mehrere Distanzsensoren. Von besonderem Interesse ist dabei die Pose bzw. Orientierung der Sensoren zum Fahrzeug, da entschieden werden muss, ob erkannte Objekte sich innerhalb des Freiraums befinden und als Hindernis behandelt werden müssen oder ob sie vernachlässigt werden können. Das Ermitteln der Position bzw. Pose des Sensors am Fahrzeug wird als extrinsische Kalibrierung bezeichnet. Die Qualität, Robustheit und Effizienz der Kalibrierung sind wichtig für die Realisierung eines Schienenfahrzeugs, das automatisiert betrieben wird. Die extrinsische Kalibrierung muss mindestens einmal nach der Inbetriebnahme eines Distanzsensors durchgeführt werden. Um Veränderungen durch Alterung oder Umwelteinflüsse zu erkennen, ist eine Kalibrierung zusätzlich während des Betriebs immer wieder nötig. Falls eine Verschlechterung aufgrund der extrinsischen Kalibrierung festgestellt wird, muss diese behoben werden.

Der Stand der Technik bei der extrinsischen Kalibrierung von Lidar- und Radarsensoren an Fahrzeugen umfasst eine Kombination fortschrittlicher Techniken zur genauen Bestimmung der Position und Ausrichtung dieser Sensoren relativ zum Fahrzeugkoordinatensystem. Forscher und Automobilhersteller haben robuste und effiziente Methoden entwickelt, um die mit der Kalibrierung verbundenen Herausforderungen für diese Sensoren unter realen Fahrbedingungen zu bewältigen. Einer der Schlüsselansätze ist die Verwendung spezieller Kalibrierungsziele oder natürlicher Merkmale in der Umgebung als Bezugspunkte. Diese Ziele können entweder aktiv oder passiv erkannt werden. Die Bezugspunkte werden verwendet, um die räumliche Beziehung zwischen den Sensoren und dem Fahrzeug herzustellen.

Anschließend werden Optimierungsalgorithmen wie Bündelausgleich oder nichtlineare kleinste Quadrate eingesetzt, es erfolgt dann eine Verfeinerung der Kalibrierungsparameter durch Minimierung des Reprojektionsfehlers oder von Residuen bei der Sensormessung. Die Referenzmarken werden für die Kalibrierung entweder temporär oder dauerhaft installiert. Sie werden häufig mit hochpräzisen Mitteln gemessen oder sogar kartiert. Beide Optionen können ressourcenaufwändig, insbesondere zeitaufwändig, und fehleranfällig sein.

Um die Genauigkeit und Robustheit des Kalibrierungsprozesses weiter zu verbessern, haben Forscher die Integration von Daten mehrerer Sensoren, einschließlich Kameras und Trägheitsmessungen (IMUs) und globalen Navigationssatellitensystemen (GNSS) untersucht. Durch die Zusammenführung der Informationen aus komplementären Sensoren kann die extrinsische Kalibrierung widerstandsfähiger gegenüber Umgebungseinflüssen, Änderungen, einer Sensorverschlechterung und anderen Unsicherheitsquellen gemacht werden. Ein weiterer wichtiger Aspekt des Standes der Technik in der extrinsischen Kalibrierung ist der Fokus auf dynamische und automatisierte Kalibrierungstechniken. Anstatt sich ausschließlich auf die statische Kalibrierung zu verlassen, die während der Ersteinrichtung durchgeführt wird, ist eine kontinuierliche Überwachung und Anpassung der Kalibrierungsparameter während des Fahrzeugbetriebs beabsichtigt. Der Betrieb ist entscheidend für die Aufrechterhaltung einer genauen Sensorausrichtung, wenn das Fahrzeug auf verschiedene Situationen, insbesondere unterschiedliche Fahrbedingungen, Umgebungsfaktoren und mögliche Änderungen in der Sensorphysik stößt.

Es besteht also die Aufgabe, ein Verfahren und eine Vorrichtung zur Kalibrierung eines Distanzsensors zur Umgebungserfassung eines Schienenfahrzeugs bereitzustellen, welche auch während dem Betrieb des Schienenfahrzeugs einsetzbar sind.

Diese Aufgabe wird durch ein Verfahren zur Kalibrierung eines Distanzsensors zur Vermessung der Umgebung eines Schienenfahrzeugs gemäß Patentanspruch 1, ein Verfahren zur Detektion eines Objekts gemäß Patentanspruch 10, eine Kalibrationseinrichtung gemäß Patentanspruch 11, eine Objektdetektionseinrichtung gemäß Patentanspruch 12 und ein Schienenfahrzeug gemäß Patentanspruch 13 gelöst.

Bei dem erfindungsgemäßen Verfahren zur Kalibrierung eines Distanzsensors zur Vermessung der Umgebung eines Schienenfahrzeugs werden automatisiert Sensordaten von mindestens drei nicht kollinear angeordneten Objekten in einer Umgebung des Schienenfahrzeugs durch einen von dem Schienenfahrzeug mitgeführten zu kalibrierenden Distanzsensor erfasst. Als Distanzsensor soll ein Sensor verstanden werden, mit dem Abstände zu Objekten messbar sind. Wie noch im Detail erläutert, wird der Distanzsensor erfindungsgemäß so ausgebildet, dass er auch dazu in der Lage ist, einen Doppler-Effekt zu messen, der bei einer Distanzmessung auftritt.

Weiterhin werden bei dem Verfahren mindestens drei Radialgeschwindigkeiten des Distanzsensors jeweils relativ zu den mindestens drei nicht kollinear angeordneten Objekten auf Basis der erfassten Sensordaten und auf Basis des Doppler-Effekts ermittelt. Es wird also die Bewegung des Distanzsensors relativ zu den mindestens drei nicht kollinear angeordneten Objekten ermittelt. Der Doppler-Effekt bewirkt eine Frequenzverschiebung der erfassten elektromagnetischen Wellen bei einer Bewegung des Sensors. Auf der Basis der Frequenzverschiebung lassen sich die Radialgeschwindigkeiten der Objekte zum Distanzsensor und damit umgekehrt auch die Radialgeschwindigkeiten des Distanzsensors zu den Objekten ermitteln. Der Distanzsensor ist also dazu eingerichtet, Frequenzen von empfangenen elektromagnetischen Wellen, welche an zu vermessenden Objekten reflektiert werden, zu messen.

Auf Basis der ermittelten Radialgeschwindigkeiten des Distanzsensors wird eine vektorielle Eigengeschwindigkeit des Distanzsensors, auch Eigenbewegung genannt, und damit auch eine Bewegungsrichtung des Distanzsensors ermittelt. Die Eigengeschwindigkeit (auch Ego-Motion genannt) bezeichnet in der Sensorik und im Bereich des autonomen Fahrens die Schätzung der eigenen Bewegung eines Fahrzeugs oder einer Kamera bzw. eines Sensors insbesondere Distanzsensors im Raum.

Die Eigenbewegung bzw. Eigengeschwindigkeit des Distanzsensors kann ebenfalls über einen Kleinste-Quadrate-Ansatz (z. B. eine Linear-Least-Square-Rechnung) ausgerechnet werden.

Die einzelne scheinbare Radialgeschwindigkeit vᵣ eines Punktes P ergibt sich beispielsweise aus dem Produkt des auf einen Einheitsvektor normierten Richtungsvektors zwischen der Position P eines abgetasteten Punktes und der Position P_{S} des Distanzsensors multipliziert mit der scheinbaren vektoriellen Geschwindigkeit -v des abgetasteten Punktes: ${v}_{r} = \frac{P - {P}_{S}}{\left‖P-{P}_{S}\right‖} ⋅ \left(-v\right) .$ (1)

Mit einer Linear-Least-Square-Rechnung lässt sich somit vorzugsweise auf Basis aller gemessenen scheinbaren Radial-Geschwindigkeiten eine gemittelte scheinbare vektorielle Geschwindigkeit -*v̅* der Objekte berechnen. Die Objekte selber sollten sich vorzugsweise nicht bewegen, um aus der scheinbaren Geschwindigkeit -v der Objekte die vektorielle Geschwindigkeit v^{S} des Distanzsensors zu berechnen. Sich bewegende Objekte können aber auch als Ausreißer herausgefiltert werden. D.h., die realen Bewegungen der Objekte selbst werden z. B. auf Basis der Statistik herausgefiltert, so dass die Vermessung von bewegten Objekten das Ergebnis nicht verfälscht. Da sich die stationären vermessenen Punkte parallel zu dem Distanzsensor bewegen, ergibt sich aus der vektoriellen Geschwindigkeit der gemittelten vektorielle Geschwindigkeit -*v̅* der abgetasteten Punkte die vektorielle Geschwindigkeit v^{S} des Distanzsensors: ${v}^{S} = \overline{v} .$ (2)

Dabei ist die geschätzte Bewegungsrichtung des Distanzsensors der scheinbaren Bewegungsrichtung der Punkte bzw. Objekte gerade entgegengesetzt. Aus der vektoriellen Geschwindigkeit v^{S} des Distanzsensors und einer vorbekannten vektoriellen Eigengeschwindigkeit v des Schienenfahrzeugs wird die Orientierung ²T³ des Distanzsensors (als Matrix) relativ zu einer Bewegungsrichtung des Schienenfahrzeugs ermittelt, wobei gilt: ${v}^{S} = T 3 2 \cdot v .$ (3)

Die Orientierung ²T³ des Distanzsensors wird schließlich mit einer vorbekannten Soll-Orientierung TS des Distanzsensors des Schienenfahrzeugs zum Schienenfahrzeug bzw. zur Bewegungsrichtung des Schienenfahrzeugs (ebenfalls als Matrix darstellbar) verglichen. Die Orientierung des Distanzsensors relativ zur Bewegungsrichtung des Schienenfahrzeugs beschreibt die Ausrichtung bzw. Pose des Sensors relativ zu einem in Fahrtrichtung bzw. in Längsachsenrichtung des Schienenfahrzeugs ausgerichteten Koordinatensystem und wird von den extrinsischen Parametern einer Sensorkalibration umfasst. Die Soll-Orientierung umfasst eine gewünschte und vorbekannte Orientierung vorzugsweise die bei der letzten Kalibrierung oder Justierung ermittelte oder eingestellte Orientierung des Distanzsensors.

Auf Basis des Vergleichs wird eine Dejustierung des Distanzsensors für den Fall ermittelt, dass bei dem Vergleich als Ergebnis herauskommt, dass die ermittelte Orientierung des Distanzsensors von der vorbekannten Soll-Orientierung des Distanzsensors des Schienenfahrzeugs abweicht bzw. mehr als um einen vorbestimmten Schwellwert eines Winkels, vorzugsweise Raumwinkels, abweicht. Eine solche Abweichung umfasst eine Drehung zwischen zwei Matrizen ²T³, TS, welche die aktuelle Orientierung bzw. die Soll-Orientierung des Distanzsensors relativ zu dem Schienenfahrzeug bzw. relativ zu dessen Bewegungsrichtung angeben. Die Abweichung kann als Drehwinkel zwischen den beiden Matrizen ²T³, TS ausgedrückt werden. Vorteilhaft kann eine Dejustierung eines Distanzsensors auf Basis der Abweichung der Orientierung des Distanzsensors relativ zu einer vorbekannten Soll-Orientierung des Distanzsensors während des Betriebs des Schienenfahrzeugs erkannt werden und korrigiert werden, so dass die Präzision einer Objektdetektion und einer Lokalisierung eines solchen Objekts auch während des gesamten Betriebs eines Schienenfahrzeugs gesichert werden kann. Vorteilhaft wird kein spezielles Kalibrationsziel benötigt, so dass die Kalibration direkt im Feld, d.h. insbesondere auch während des Betriebs eines Schienenfahrzeugs erfolgen kann. Vorteilhaft wird die Eigenschaft von Schienenfahrzeugen ausgenutzt, dass sie aufgrund des Schienensystems eine vordefinierte eingeschränkte vorbestimmte und bekannte Bewegungsrichtung aufweisen. Weiterhin muss auch kein Rechenaufwand für die Nachverfolgung und Detektion von Kalibrationszielen aufgebracht werden, da zur Kalibration irgendwelche Objekte in der Umgebung des Schienenfahrzeugs genutzt werden können.

Die erfindungsgemäße Kalibrationseinrichtung weist eine Eingangsschnittstelle zum automatisierten Empfangen von Sensordaten, welche von mindestens drei nicht kollinear angeordneten Objekten in einer Umgebung eines Schienenfahrzeugs durch einen von dem Schienenfahrzeug mitgeführten Distanzsensor erfasst wurden, auf.

Die erfindungsgemäße Kalibrationseinrichtung umfasst außerdem eine Radialeinheit zum Ermitteln von drei Radialgeschwindigkeiten des Distanzsensors jeweils relativ zu den mindestens drei nicht kollinear angeordneten Objekten.

Teil der erfindungsgemäßen Kalibrationseinrichtung ist auch eine Eigenbewegungsermittlungseinheit zum Ermitteln einer vektoriellen Eigengeschwindigkeit des Distanzsensors auf Basis der drei ermittelten Radialgeschwindigkeiten des Distanzsensors.

Die erfindungsgemäße Kalibrationseinrichtung weist auch eine Orientierungsermittlungseinheit zum Ermitteln einer aktuellen Orientierung des Distanzsensors relativ zu einer Bewegungsrichtung des Schienenfahrzeugs auf Basis der ermittelten vektoriellen Eigengeschwindigkeit des Distanzsensors und einer vorbekannten vektoriellen Eigengeschwindigkeit des Schienenfahrzeugs auf.

Weiterhin weist die erfindungsgemäße Kalibrationseinrichtung auch eine Vergleichseinheit zum Vergleichen der aktuellen Orientierung des Distanzsensors mit einer Soll-Orientierung des Distanzsensors des Schienenfahrzeugs und zum Ermitteln einer unerwünschten Dejustierung des Distanzsensors für den Fall auf, dass die ermittelte aktuelle Orientierung des Distanzsensors von der vorbekannten Soll-Orientierung des Distanzsensors des Schienenfahrzeugs abweicht. Die erfindungsgemäße Kalibrationseinrichtung teilt die Vorteile des erfindungsgemäßen Verfahrens zur Kalibrierung eines Distanzsensors zur Detektion der Umgebung eines Schienenfahrzeugs.

Die erfindungsgemäße Objektdetektionseinrichtung weist eine erfindungsgemäße Kalibrationseinrichtung auf. Teil der erfindungsgemäßen Objektdetektionseinrichtung ist auch ein Distanzsensor zum Erfassen von Sensordaten von der Umgebung des Schienenfahrzeugs. Die erfindungsgemäße Objektdetektionseinrichtung umfasst außerdem eine erfindungsgemäße Kalibrationseinrichtung zum Durchführen einer Kalibrierung des Distanzsensors. Teil der erfindungsgemäßen Objektdetektionseinrichtung ist zudem eine Detektionseinheit zum Identifizieren und/oder Lokalisieren eines Objekts in der Umgebung des Schienenfahrzeugs auf Basis der erfassten Sensordaten und auf Basis einer Kalibration des Distanzsensors durch die Kalibrationseinrichtung. Die erfindungsgemäße Objektdetektionseinrichtung teilt die Vorteile der erfindungsgemäßen Kalibrationseinrichtung.

Das erfindungsgemäße Schienenfahrzeug weist eine Antriebseinrichtung zum Antreiben einer Fahrbewegung des Schienenfahrzeugs, eine Bremseinrichtung zum Abbremsen einer Fahrbewegung des Schienenfahrzeugs, eine erfindungsgemäße Objektdetektionseinrichtung zum Identifizieren und Lokalisieren eines Objekts in der Umgebung des Schienenfahrzeugs und eine Steuereinrichtung zum Ansteuern der Antriebseinrichtung und der Bremseinrichtung in Abhängigkeit von einer Identifizierung und Lokalisierung eines Objekts durch die Objektdetektionseinrichtung auf. Die Objektdetektionseinrichtung berücksichtig also die Kalibrationsinformation der Kalibrationseinrichtung bei der Lokalisierung und Vermessung eines oder mehrerer Objekte. Das Schienenfahrzeug teilt die Vorteile der erfindungsgemäßen Objektdetektionseinrichtung.

Ein Großteil der zuvor genannten Komponenten der erfindungsgemäßen Kalibrationseinrichtung und der erfindungsgemäßen Objektdetektionseinrichtung können ganz oder teilweise in Form von Softwaremodulen in einem Prozessor eines entsprechenden Rechensystems realisiert werden, z.B. in einer Steuereinrichtung oder einem Rechensystem eines Schienenfahrzeugs.

Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem ladbar ist, mit Programmabschnitten, um die Schritte des erfindungsgemäßen Verfahrens zur Kalibrierung eines Distanzsensors zur Vermessung der Umgebung eines Schienenfahrzeugs, insbesondere die Schritte des Ermittelns zur Kalibrierung eines Distanzsensors zur Detektion der Umgebung eines Schienenfahrzeugs des Ermittelns von mindestens drei Radialgeschwindigkeiten des Distanzsensors jeweils relativ zu den mindestens drei nicht kollinear angeordneten Objekten, des Ermittelns einer vektoriellen Eigengeschwindigkeit des Distanzsensors auf Basis der mindestens drei ermittelten Radialgeschwindigkeiten des Distanzsensors, des Ermittelns einer aktuellen Orientierung des Distanzsensors auf Basis der ermittelten Orientierung des Distanzsensors und einer vorbekannten vektoriellen Eigengeschwindigkeit des Schienenfahrzeugs, des Vergleichens der aktuellen Orientierung des Distanzsensors mit einer vorbekannten Soll-Orientierung des Distanzsensors des Schienenfahrzeugs zum Schienenfahrzeug und des Ermittelns einer Dejustierung des Distanzsensors für den Fall, dass die ermittelte aktuelle Orientierung des Distanzsensors von der vorbekannten Soll-Orientierung des Distanzsensors des Schienenfahrzeugs abweicht, auszuführen, wenn das Programm in dem Rechensystem ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Zum Transport zum Rechensystem bzw. zur Steuereinrichtung und/oder zur Speicherung an oder in dem Rechensystem bzw. der Steuereinrichtung kann ein computerlesbares Medium, z.B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Wie bereits erläutert, werden im Rahmen des erfindungsgemäßen Verfahrens zur Kalibrierung eines Distanzsensors zur Detektion der Umgebung eines Schienenfahrzeugs für die Berechnung der vektoriellen Eigengeschwindigkeit v^{s} des Distanzsensors neben der mindestens drei Radialgeschwindigkeiten vᵣ vorzugsweise auch die Positionen der mindestens drei nicht kollinear angeordneten Objekte durch eine Messung von deren Position, vorzugsweise durch den Distanzsensor, ermittelt. Wie bereits erwähnt, lassen sich durch Mehrfachmessungen Messdaten generieren, welche durch ein Regressionsverfahren, insbesondere ein Least-Square-Verfahren, auswerten lassen. Auf diese Weise wird die Genauigkeit der Messung der vektoriellen Eigengeschwindigkeit v^{s} des Distanzsensors weiter verbessert.

In einer Variante des erfindungsgemäßen Verfahrens zur Kalibrierung eines Distanzsensors zur Detektion der Umgebung eines Schienenfahrzeugs basiert die vektorielle Eigengeschwindigkeit des Schienenfahrzeugs auf einer Eigenbewegung des Schienenfahrzeugs, welche eine geradlinige Bewegung umfasst. Ist die Bewegung des Schienenfahrzeugs geradlinig, so kann jede Abweichung der ermittelten Bewegungsrichtung des Distanzsensors von dieser geradlinigen Bewegung als Dejustierung des Distanzsensors verstanden werden, weil dann die aktuelle Orientierung des Distanzsensors von der Soll-Orientierung abweicht.

Fährt dagegen das Schienenfahrzeug in einer Kurve bzw. einem nicht-linear verlaufenden Schienenabschnitt, so kann die Eigenbewegung des Schienenfahrzeugs auf Basis eines Bewegungsmodells ermittelt werden. Daten zur Parametrierung des Bewegungsmodells können durch eine Messeinrichtung und/oder Landkartendaten gewonnen werden. Beispielsweise kann eine solche Messeinrichtung ein Beschleunigungsmesssystem zur Messung der Orientierung des Schienenfahrzeugs umfassen.

Zur Messung der Eigenbewegung des Schienenfahrzeugs können zusätzlich oder alternativ auch Landkartendaten und eine Messeinrichtung zur Ermittlung der Ego-Position des Schienenfahrzeugs genutzt werden. Vorteilhaft kann eine Eigenbewegung eines Schienenfahrzeugs an einer hochgenauen Landkarte mit Schienendaten abgelesen werden, wenn dessen Ego-Position bekannt ist, da die Orientierung der Schienen die Bewegungsrichtung des Schienenfahrzeugs vorgibt.

Bevorzugt umfasst die Messeinrichtung zur Ermittlung der Ego-Position des Schienenfahrzeugs ein Sattelitennavigationssystem, vorzugsweise ein RTK-Sattelitennavigationssystem. Vorteilhaft kann die aktuelle Position des Schienenfahrzeugs sehr exakt ermittelt werden. Werden zusätzlich noch hochgenaue Landkartendaten hinzugezogen, so kann anhand der Landkartendaten eine aktuelle Bewegungsrichtung des Schienenfahrzeugs sehr exakt ermittelt werden und damit auch u.a. die aktuelle Orientierung des Distanzsensors gewonnen werden, um gegebenenfalls eine Dejustierung zwischen dem Distanzsensor und dem Schienenfahrzeug festzustellen. Neben der Verwendung von Sattelitennavigationssystemen oder Intertialmesssystemen können auch an der Schienenstrecke angeordnete Balisen genutzt werden, um eine Ego-Position eines Schienenfahrzeugs zu ermitteln und anhand von Landkartendaten ein Bewegungsmodell eines Schienenfahrzeugs zu erstellen.

Bevorzugt umfasst der Distanzsensor einen Entfernungsmessungssensor, welcher dazu eingerichtet ist, eine Radialgeschwindigkeit eines Objekts in der Umgebung relativ zu dem Schienenfahrzeug auf Basis des Doppler-Effekts zu messen. Vorteilhaft kann mit dem Doppler-Effekt besonders einfach und exakt eine scheinbare Radialgeschwindigkeit eines Objekts relativ zu dem Distanzsensor gemessen werden.

Der erfindungsgemäße Distanzsensor umfasst als Entfernungsmessungssensor dabei vorzugsweise einen Radar-Sensor und/oder einen FMCW-Lidar-Sensor. Derartige aktive Distanzsensoren können so vorteilhaft auch zur Messung der Radialgeschwindigkeit eines Objekts zu dem jeweiligen Distanzsensor genutzt werden.

Bevorzugt wird eine Kalibrierung des Distanzsensors in vorbestimmten Zeitintervallen während einer Fahrt des Schienenfahrzeugs wiederholt durchgeführt. Vorteilhaft können durch die wiederholte Messung und Prüfung auch erst während der Fahrt auftretende Dejustierungen des Distanzsensors erkannt und behoben werden.

Wie bereits erwähnt, können zusätzlich auch Ego-Positionsdaten des Schienenfahrzeugs ermittelt werden, um eine aktuelle Bewegungsrichtung des Schienenfahrzeugs zu ermitteln. Bevorzugt werden die Ego-Positionsdaten des Schienenfahrzeugs auf Basis von Satellitennavigationsdaten, vorzugsweise RTK-basierten Satellitennavigationsdaten, ermittelt. Vorteilhaft können Ego-Positionsdaten, insbesondere RTK-basierte Satellitennavigationsdaten, besonders genau ermittelt werden, wodurch die Bewegungsrichtung des Schienenfahrzeugs besonders genau ermittelt wird.

Die bei der Ermittlung der Ego-Positionsdaten vorzugsweise genutzte Echtzeitkinematik (abgekürzt durch "RTK" für "Real Time Kinematic") nutzt neben der Code-Phasenmessung auch die Trägerphasenmessung der GNSS-Signale ("GNSS" steht für "global Navigation Satellite System", im Deutschen etwa "Globales Navigationssatellitensystem"). Bei der Signalverarbeitung wird nicht nur der Informationsgehalt des Trägersignals ausgewertet, sondern auch dessen exakte Phase, also der genaue Zeitpunkt innerhalb des Schwingungszyklus ermittelt. Da die Wellenlänge des Trägersignals wesentlich kürzer ist als die Wellenlänge der darin enthaltenen Daten, ermöglicht die Trägerphasenmessung eine deutlich präzisere Distanzbestimmung. Eine Referenzstation, deren Position exakt bekannt ist, misst kontinuierlich die Trägerphasen der empfangenen Satellitensignale und vergleicht diese mit den erwarteten Werten basierend auf ihrer bekannten Position. Die Differenzen, welche vor allem durch atmosphärische Einflüsse und Mehrwegeeffekte verursacht werden, werden dann in Form von Korrekturdaten in Echtzeit an die RTK-fähige Empfangseinheit, in diesem Fall eine Empfangseinheit in dem Schienenfahrzeug, übermittelt. Eine Einheit zur Ermittlung der Ego-Position des Schienenfahrzeugs, welche vorzugsweise Bestandteil des Schienenfahrzeugs ist, wendet diese Korrekturen auf ihre eigenen Messungen zur Ermittlung ihrer Ego-Position an und kann so ihre Position mit Zentimetergenauigkeit ermitteln.

Die Daten zur Selbstlokalisierung und Ermittlung der Bewegungsrichtung des Schienenfahrzeugs können durch technisch sehr unterschiedliche Arten von Messgeräten erfasst werden. Die genannten Messdaten können die folgenden Typen von Messdaten umfassen:
- Satellitennavigationsdaten,
- IMU-Daten (IMU = inertial measurement unit = inertiale Messeinheit)
- Geschwindigkeitssensordaten,
- Odometriedaten,
- sogenannte RTK-Korrekturdaten.

Eine inertiale Messeinheit misst Beschleunigungs- und Verzögerungsdaten und kann zur Ermittlung einer Orientierung eines Schienenfahrzeugs und damit zur Ermittlung der Pose des Schienenfahrzeugs genutzt werden. Geschwindigkeitssensordaten und Odometriedaten können zur Ermittlung der Ego-Position eines Schienenfahrzeugs eingesetzt werden.

Satellitennavigation kann für eine Positionsermittlung oder Bewegungsrichtungsermittlung im Rahmen der differenziellen Satellitennavigation durch eine Ergänzung von Referenzstationen sowie die Auswertung der Phasenverschiebung der Trägerwelle hohe Genauigkeiten erreichen. Eine inertiale Messeinheit kann zur Orientierungsmessung genutzt werden. Geschwindigkeitsdaten und Odometriedaten können ebenfalls zur Positionsbestimmung genutzt werden. Vorteilhaft können auch unterschiedliche Messverfahren kombiniert werden. Je nach Situation und aktueller Anwendbarkeit der unterschiedlichen Verfahren können die Messwerte unterschiedlicher Messverfahren kombiniert werden, beispielsweise durch Datenfusion, insbesondere durch gewichtete Mittelung der Messwerte.

Die Erfindung wird im Folgenden unter Hinweis auf die beigefügten Figuren anhand von Ausführungsbeispielen noch einmal näher erläutert. Es zeigen:
- FIG 1: eine schematische Darstellung eines Vorgangs zur Ermittlung von Geschwindigkeitsdaten im Rahmen eines Verfahrens zur Kalibrierung eines Distanzsensors zur Detektion der Umgebung eines Schienenfahrzeugs gemäß einem Ausführungsbeispiel der Erfindung,
- FIG 2: ein Flussdiagramm, welches ein Verfahren zur Kalibrierung eines Distanzsensors zur Detektion der Umgebung eines Schienenfahrzeugs gemäß einem Ausführungsbeispiel der Erfindung veranschaulicht,
- FIG 3: ein Flussdiagramm, welches ein Verfahren zur Detektion eines Objekts gemäß einem Ausführungsbeispiel der Erfindung veranschaulicht,
- FIG 4: eine schematische Darstellung einer Kalibrationseinrichtung gemäß einem Ausführungsbeispiel der Erfindung,
- FIG 5: eine schematische Darstellung einer Objektdetektionseinrichtung gemäß einem Ausführungsbeispiel der Erfindung,
- FIG 6: eine schematische Darstellung eines Schienenfahrzeugs gemäß einem Ausführungsbeispiel der Erfindung.

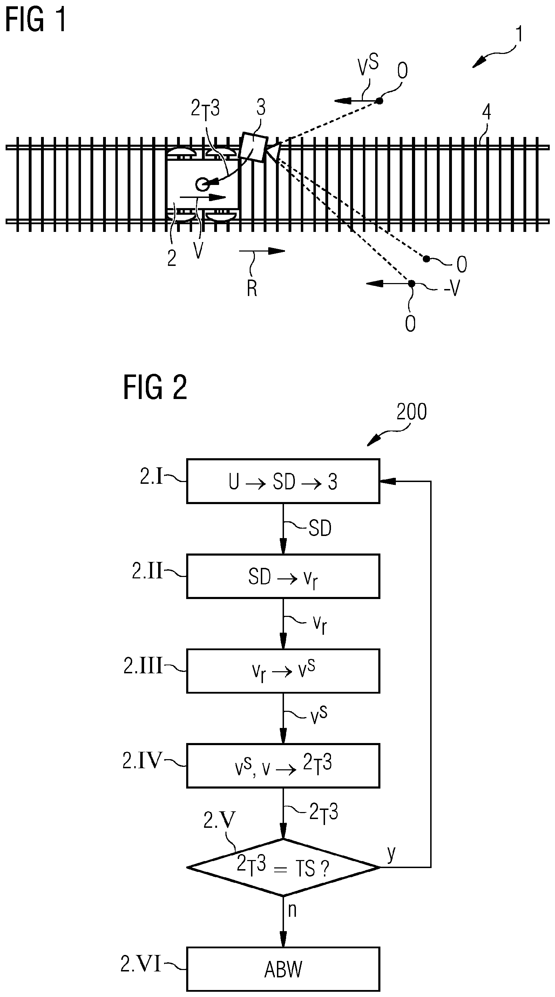

In FIG 1 ist eine schematische Darstellung eines Szenarios 1 eines Vorgangs zur Ermittlung von Sensordaten von der Umgebung eines Schienenfahrzeugs im Rahmen eines Verfahrens zur Kalibrierung eines Distanzsensors zur Vermessung der Umgebung eines Schienenfahrzeugs gemäß einem Ausführungsbeispiel der Erfindung veranschaulicht.

Das in FIG 1 gezeigte Szenario 1 umfasst ein Schienenfahrzeug 2 mit einem Distanzsensor 3. Das Schienenfahrzeug 2 fährt auf einer Schienenstrecke 4 und erfasst von seiner Umgebung, welche insbesondere die Schienenstrecke 4 umfasst, Sensorsignale. Der Distanzsensor 3 ist fest am Schienenfahrzeug 2 montiert. Infolgedessen entspricht die Bewegung bzw. Geschwindigkeit v^{s} des Distanzsensors 3 der umgekehrten Bewegung von Objekten O, welche ein Sensorsignal des Distanzsensors 3 reflektieren. Die Bewegung bzw. Geschwindigkeit v^{s} des Distanzsensors 3 sollte parallel zur Bewegung bzw. Geschwindigkeit v des Schienenfahrzeugs 2 erfolgen. Der Distanzsensor 3 kann die Radialrichtung der scheinbaren Bewegung bzw. Geschwindigkeit -v der Objekte O bzw. 3D-Punkte und deren Position relativ zu dem Distanzsensor 3 messen. Diese Informationen können verwendet werden, um die Eigenbewegung bzw. vektorielle Geschwindigkeit v^{s} des Distanzsensors 3 abzuschätzen.

Da diese Eigenbewegung des Distanzsensors 3 parallel zur Bewegung des Schienenfahrzeugs 2 erfolgen muss, kann damit die Orientierung ²T³ des Distanzsensors 3 am Schienenfahrzeug (extrinsische Parameter) ermittelt werden. Wird eine Abweichung der Orientierung ²T³ des Distanzsensors 3 von einer Soll-Orientierung ermittelt, so lässt das auf eine Dejustierung der extrinsischen Parameter des Distanzsensors 3 schließen.

Eine wesentliche Voraussetzung für diesen Ansatz ist die Kenntnis der Bewegungsrichtung R des Schienenfahrzeugs 2. Die Bewegungsrichtung R des Schienenfahrzeugs 2 ist leicht ermittelbar auf einem Schienenfahrzeug ohne externe Messung, wenn das Schienenfahrzeug 2 auf einem geraden Gleisabschnitt fährt. In einem solchen Fall ist die Bewegungsrichtung stark eingeschränkt. Es kann zu geringfügigen Störungen durch Pendelschwingungen oder Schienenstöße kommen. Diese Auswirkungen können als normal verteilte Fehlereinflüsse leicht erkannt werden. Wenn die genaue Bewegungsrichtung des Schienenfahrzeugs 2 durch eine Trägheitsmesseinrichtung und durch Karteninformationen bekannt ist, kann der Distanzsensor 3 auch auf nicht geraden Gleisabschnitten kalibriert werden.

In FIG 2 ist ein Flussdiagramm 200 gezeigt, welches ein Verfahren zur Kalibrierung eines Distanzsensors 3 zur Detektion der Umgebung eines Schienenfahrzeugs 2 veranschaulicht.

Bei dem Schritt 2.I des in FIG 2 gezeigten Verfahrens erfolgt ein automatisiertes Erfassen von Sensordaten SD von mindestens drei nicht kollinear angeordneten Objekten in einer Umgebung U eines Schienenfahrzeugs durch einen von dem Schienenfahrzeug mitgeführten Distanzsensor 3.

Bei dem Schritt 2.II werden drei Radialgeschwindigkeiten vᵣ des Sensors 3 jeweils relativ zu den mindestens drei nicht kollinear angeordneten Objekten auf Basis der Sensordaten SD ermittelt.

Bei dem Schritt 2.III wird eine vektorielle Eigengeschwindigkeit v^{s} des Distanzsensors 3 auf Basis der drei ermittelten Radialgeschwindigkeiten vᵣ des Distanzsensors 3 ermittelt.

Bei dem Schritt 2.IV wird eine aktuelle Orientierung ²T³ des Distanzsensors 3 auf Basis der ermittelten vektoriellen Eigengeschwindigkeit v^{s} des Distanzsensors 3 und auf Basis einer vektoriellen Eigengeschwindigkeit v des Schienenfahrzeugs ermittelt, deren Kenntnis auf dem Verlauf der Schienenstrecke basiert.

Bei dem Schritt 2.V wird die Orientierung ²T³ des Distanzsensors 3 mit einer vorbekannten Soll-Orientierung TS des Distanzsensors 3 relativ zum Schienenfahrzeug 2 verglichen.

Bei dem Schritt 2.VI wird eine Dejustierung des Distanzsensors 3 für den Fall festgestellt, dass die ermittelte Orientierung ²T³ des Distanzsensors 3 von der vorbekannten Soll-Orientierung TS des Schienenfahrzeugs 2 abweicht, was in FIG 2 mit "n" symbolisiert ist, und es wird eine Abweichung ABW ausgegeben. Die Kenntnis der Abweichung ABW kann zur Neujustierung des Distanzsensors 3 relativ zu dem Schienenfahrzeug 2 genutzt werden. Wird keine Dejustierung festgestellt, was in FIG 2 mit "y" symbolisiert ist, so wird das Kalibrierungsverfahren erneut ausgeführt, wobei zum Schritt 2.1 zurückgekehrt wird.

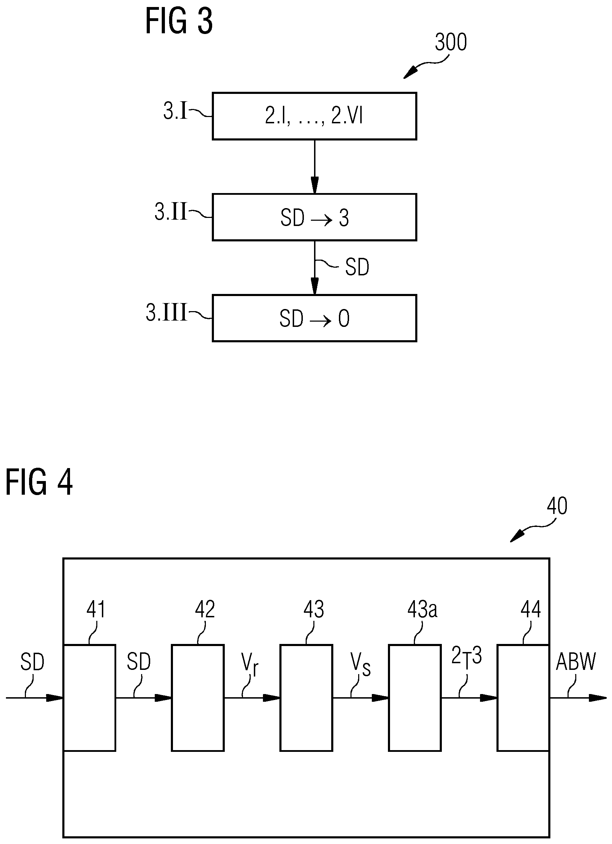

In FIG 3 ist ein Flussdiagramm 300, welches ein Verfahren zur Detektion eines Objekts veranschaulicht.

Bei dem Schritt 3.I wird eine Kalibrierung eines Distanzsensors 3 eines Schienenfahrzeugs 2 zur Detektion eines Objekts in der Umgebung des Schienenfahrzeugs 2 mit dem in FIG 2 veranschaulichten erfindungsgemäßen Verfahren zur Kalibrierung eines Distanzsensors 3 zur Detektion der Umgebung eines Schienenfahrzeugs durchgeführt. Gegebenenfalls wird eine Dejustierung des Distanzsensors 3 festgestellt und die Dejustierung auf Basis der ermittelten Abweichung ABW behoben.

Bei dem Schritt 3.II werden Sensordaten SD von der Umgebung des Schienenfahrzeugs 2 mit dem kalibrierten Distanzsensor 3 erfasst.

Bei dem Schritt 3.III erfolgt ein Identifizieren und/oder Lokalisieren eines Objekts O in der Umgebung des Schienenfahrzeugs 2 auf Basis der erfassten Sensordaten SD.

In FIG 4 ist eine schematische Darstellung einer Kalibrationseinrichtung 40 gemäß einem Ausführungsbeispiel der Erfindung gezeigt.

Die Kalibrationseinrichtung 40 weist eine Schnittstelle 41 zu einem Distanzsensor 3 auf, der zum automatisierten Erfassen von Sensordaten SD von drei nicht kollinear angeordneten Objekten in einer Umgebung U eines Schienenfahrzeugs 2 eingerichtet ist.

Teil der Kalibrationseinrichtung 40 ist auch eine Radialeinheit 42 zum Ermitteln von mindestens drei Radialgeschwindigkeiten vᵣ des Distanzsensors 3 jeweils relativ zu den drei nicht kollinear angeordneten Objekten.

Die Kalibrationseinrichtung 40 weist auch eine Eigenbewegungsermittlungseinheit 43 zum Ermitteln einer vektoriellen Eigengeschwindigkeit v^{S} des Distanzsensors 3 auf Basis der drei ermittelten Radialgeschwindigkeiten vᵣ des Distanzsensors 3 auf.

Ebenfalls umfasst die Kalibrationseinrichtung 40 eine Orientierungsermittlungseinheit 43a zum Ermitteln einer aktuellen Orientierung ²T³ des Distanzsensors 3 auf Basis der ermittelten vektoriellen Eigengeschwindigkeit v^{s} des Distanzsensors 3 und einer vorbekannten vektoriellen Eigengeschwindigkeit v des Schienenfahrzeugs 2.

Teil der Kalibrationseinrichtung 40 ist zudem eine Vergleichseinheit 44 zum Vergleichen der aktuellen Orientierung ²T³ des Distanzsensors 3 mit einer ursprünglich eingestellten Soll-Orientierung TS des Schienenfahrzeugs 2 und zum Ermitteln einer Dejustierung des Distanzsensors 3 für den Fall, dass die ermittelte aktuelle Orientierung ²T³ des Distanzsensors 3 von der vorbekannten Soll-Orientierung TS des Schienenfahrzeugs 2 abweicht bzw. eine Abweichung ABW aufweist.

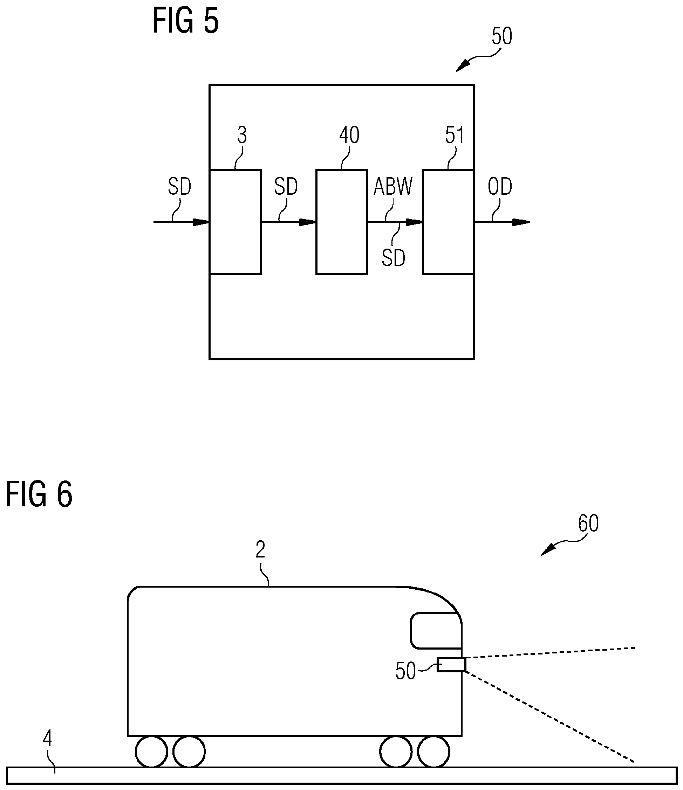

In FIG 5 ist eine schematische Darstellung einer Objektdetektionseinrichtung 50 gemäß einem Ausführungsbeispiel der Erfindung gezeigt.

Diese Objektdetektionseinrichtung 50 weist einen Distanzsensor 3 zum Erfassen von Sensordaten SD von der Umgebung eines Schienenfahrzeugs auf, welches den Distanzsensor 3 umfasst.

Die Objektdetektionseinrichtung 50 umfasst auch eine erfindungsgemäße Kalibrationseinrichtung 40, wie sie in FIG 4 dargestellt ist, zum Durchführen einer Kalibrierung des Distanzsensors 3 auf Basis der von dem Distanzsensor erfassten Sensordaten SD.

Teil der Objektdetektionseinrichtung 50 ist auch eine Detektionseinheit 51 zum Identifizieren und/oder Lokalisieren eines Objekts in der Umgebung des Schienenfahrzeugs 2 auf Basis der erfassten Sensordaten SD und der von der Kalibrationseinrichtung 40 ermittelten Abweichung ABW als Kalibrierungsdaten. Die Detektionseinheit 51 gibt Detektionsdaten OD aus, welche ein Objekt identifizieren und lokalisieren. Die Detektionseinheit 51 wird durch die ermittelte Abweichung ABW über eine Dejustierung informiert und berücksichtigt diese Abweichung bei der Lokalisierung und Vermessung eines detektierten Objekts, um das Objekt korrekt zu lokalisieren und zu vermessen.

In FIG 6 ist eine schematische Darstellung eines Schienenfahrzeugs 2 gemäß einem Ausführungsbeispiel der Erfindung veranschaulicht. Das in FIG 6 veranschaulichte Schienenfahrzeug 2 umfasst die in FIG 5 gezeigte erfindungsgemäße Objektdetektionseinrichtung 50. Mit der erfindungsgemäßen Objektdetektionseinrichtung 50 können Objekte im Bereich einer befahrenen Schienenstrecke 4 erkannt und lokalisiert werden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

### Bezugszeichenliste

1 Szenario eines Vorgangs zur Ermittlung von Sensordaten von der Umgebung eines Schienenfahrzeugs im Rahmen eines Verfahrens zur Kalibrierung eines Sensors zur Detektion der Umgebung eines Schienenfahrzeugs
2 Schienenfahrzeug
3 Distanzsensor
4 Schienenstrecke
40 Kalibrationseinrichtung
41 Schnittstelle zu einem Distanzsensor
42 Radialeinheit
43 Eigenbewegungsermittlungseinheit
43a Orientierungsermittlungseinheit
44 Vergleichseinheit
50 Objektdetektionseinrichtung
51 Detektionseinheit
ABW Abweichung
O Objekt
OD Detektionsdaten
R Bewegungsrichtung des Schienenfahrzeugs
SD Sensordaten
²T³ aktuelle Orientierung des Distanzsensors relativ zum Schienenfahrzeug
TS Soll-Orientierung des Distanzsensors relativ zum Schienenfahrzeug
U Umgebung eines Schienenfahrzeugs
v vektorielle Eigengeschwindigkeit des Schienenfahrzeugs
-v Geschwindigkeit der Objekte bzw. 3D-Punkte
vᵣ Radialgeschwindigkeit des Distanzsensors jeweils relativ zu den mindestens drei nicht kollinear angeordneten Objekten
v^{s} vektorielle Geschwindigkeit des Distanzsensors

## Patentansprüche

1. Verfahren zur Kalibrierung eines Distanzsensors (3) zur Vermessung der Umgebung (U) eines Schienenfahrzeugs (2), aufweisend die Schritte:
- automatisiertes Erfassen von Sensordaten (SD) von mindestens drei nicht kollinear angeordneten Objekten (O) in einer Umgebung (U) eines Schienenfahrzeugs (2) durch einen von dem Schienenfahrzeug (2) mitgeführten Distanzsensor (3),
- Ermitteln von mindestens drei Radialgeschwindigkeiten (vᵣ) des Distanzsensors (3) jeweils relativ zu den mindestens drei nicht kollinear angeordneten Objekten (O) auf Basis der erfassten Sensordaten (SD) und auf Basis des Doppler-Effekts,
- Ermitteln einer vektoriellen Eigengeschwindigkeit (v^{s}) des Distanzsensors (3) auf Basis der mindestens drei ermittelten Radialgeschwindigkeiten (vᵣ) des Distanzsensors (3),
- Ermitteln einer aktuellen Orientierung (²T³) des Distanzsensors (3) relativ zu einer Bewegungsrichtung (R) des Schienenfahrzeugs (2) auf Basis der ermittelten vektoriellen Eigengeschwindigkeit (v^{s}) des Distanzsensors (3) und einer vorbekannten vektoriellen Eigengeschwindigkeit (v) des Schienenfahrzeugs (2),
- Vergleichen der aktuellen Orientierung (²T³) des Distanzsensors (3) mit einer Soll-Orientierung (TS) des Distanzsensors (3) des Schienenfahrzeugs (2),
- Ermitteln einer Dejustierung des Distanzsensors (3) für den Fall, dass die ermittelte aktuelle Orientierung (²T³) des Distanzsensors (3) von der Soll-Orientierung (TS) des Distanzsensors (3) des Schienenfahrzeugs (2) abweicht.

2. Verfahren nach Anspruch 1, wobei die Ermittlung der vektoriellen Eigengeschwindigkeit (v^{s}) des Distanzsensors (3) auf Basis der mindestens drei ermittelten Radialgeschwindigkeiten (vᵣ) des Distanzsensors (3) sowie auf der Basis der Messung der Positionen der mindestens drei nicht kollinear angeordneten Objekte (O) erfolgt.

3. Verfahren nach Anspruch 1 oder 2, wobei die vektorielle Eigengeschwindigkeit (v) des Schienenfahrzeugs (2) auf einer Eigenbewegung (R) des Schienenfahrzeugs (2) basiert, welche eine geradlinige Bewegung umfasst.

4. Verfahren nach einem der vorstehenden Ansprüche, wobei die Eigenbewegung des Schienenfahrzeugs (2) auf Basis eines Beschleunigungsmesssystems zur Messung der Orientierung des Schienenfahrzeugs (2) ermittelt wird.

5. Verfahren nach Anspruch 3 oder 4, wobei zur Ermittlung der Eigenbewegung des Schienenfahrzeugs (2) zusätzlich Landkartendaten und eine Messeinrichtung zur Ermittlung der Ego-Position des Schienenfahrzeugs (2) genutzt werden.

6. Verfahren nach Anspruch oder 5, wobei die Messeinrichtung zur Ermittlung der Ego-Position des Schienenfahrzeugs (2) ein Sattelitennavigationssystem, vorzugsweise ein RTK-Satellitennavigationssystem, umfasst.

7. Verfahren nach einem der vorstehenden Ansprüche, wobei der Distanzsensor (3) dazu eingerichtet ist, auf Basis des Doppler-Effekts eine Radialgeschwindigkeit (vᵣ) zu messen.

8. Verfahren nach Anspruch 7, wobei der Distanzsensor (3) einen der folgenden Typen von Sensoren umfasst:
- einen Radar-Sensor,
- einen FMCW-Lidar-Sensor.

9. Verfahren nach einem der vorstehenden Ansprüche, wobei die Kalibrierung in vorbestimmten Zeitintervallen während einer Fahrt des Schienenfahrzeugs (2) wiederholt durchgeführt wird.

10. Verfahren zur Detektion eines Objekts (O), aufweisend die Schritte:
- Durchführen einer Kalibrierung eines Distanzsensors (3) eines Schienenfahrzeugs (2) zur Detektion eines Objekts (O) in der Umgebung des Schienenfahrzeugs (2) mit dem Verfahren nach einem der vorstehenden Ansprüche,
- Erfassen von Sensordaten (SD) von der Umgebung (U) des Schienenfahrzeugs (2) mit dem kalibrierten Distanzsensor (3),
- Identifizieren und/oder Lokalisieren eines Objekts (O) in der Umgebung des Schienenfahrzeugs (2) auf Basis der erfassten Sensordaten (SD).

11. Kalibrationseinrichtung (40), aufweisend:
- eine Eingangsschnittstelle (41) zum Empfangen von Sensordaten (SD), welche von mindestens drei nicht kollinear angeordneten Objekten (O) in einer Umgebung (U) eines Schienenfahrzeugs (2) durch einen von einem Schienenfahrzeug (2) mitgeführten Distanzsensor (3) erfasst wurden,
- eine Radialeinheit (42) zum Ermitteln von mindestens drei Radialgeschwindigkeiten (vᵣ) des Distanzsensors (3) jeweils relativ zu den mindestens drei nicht kollinear angeordneten Objekten (O) auf Basis der erfassten Sensordaten (SD) und auf Basis des Doppler-Effekts,
- eine Eigenbewegungsermittlungseinheit (43) zum Ermitteln einer vektoriellen Eigengeschwindigkeit (v^{s}) des Distanzsensors (3) auf Basis der mindestens drei ermittelten Radialgeschwindigkeiten (vᵣ) des Distanzsensors (3),
- eine Orientierungsermittlungseinheit (43a) zum Ermitteln einer aktuellen Orientierung (²T³) des Distanzsensors (3) relativ zu einer Bewegungsrichtung (R) des Schienenfahrzeugs (2) auf Basis der ermittelten vektoriellen Eigengeschwindigkeit (v^{s}) des Distanzsensors (3) und einer vorbekannten vektoriellen Eigengeschwindigkeit (v) des Schienenfahrzeugs (2),
- eine Vergleichseinheit (44) zum Vergleichen der aktuellen Orientierung (²T³) des Distanzsensors (3) mit einer Soll-Orientierung (TS) des Distanzsensors (3) des Schienenfahrzeugs (2) und zum Ermitteln einer Dejustierung des Distanzsensors (3) für den Fall, dass die ermittelte aktuelle Orientierung (²T³) des Distanzsensors (3) von der Soll-Orientierung (TS) des Schienenfahrzeugs (2) abweicht.

12. Objektdetektionseinrichtung (50), aufweisend:
- einen Distanzsensor (3) zum Erfassen von Sensordaten (SD) von der Umgebung (U) eines Schienenfahrzeugs (2),
- eine Kalibrationseinrichtung (40) nach Anspruch 11 zum Durchführen einer Kalibrierung des Distanzsensors (3),
- eine Detektionseinheit (51) zum Identifizieren und/oder Lokalisieren eines Objekts (O) in der Umgebung (U) des Schienenfahrzeugs (2) auf Basis der erfassten Sensordaten (SD) und auf Basis einer Kalibration des Distanzsensors durch die Kalibrationseinrichtung (40).

13. Schienenfahrzeug (2), aufweisend:
- eine Antriebseinrichtung zum Antreiben einer Fahrbewegung des Schienenfahrzeugs (2),
- eine Bremseinrichtung zum Abbremsen einer Fahrbewegung des Schienenfahrzeugs (2),
- eine Objektdetektionseinrichtung (50) nach Anspruch 12 zum Identifizieren und Lokalisieren eines Objekts (O) in der Umgebung (U) des Schienenfahrzeugs (2) mit einem Distanzsensor (3),
- eine Steuereinrichtung zum Ansteuern der Antriebseinrichtung und/oder der Bremseinrichtung in Abhängigkeit von einer Identifizierung und Lokalisierung eines Objekts (O) durch die Objektdetektionseinrichtung (50).

14. Computerprogrammprodukt, umfassend Befehle, die bei der Ausführung des Programms durch einen Computer diesen veranlassen, die Schritte des Verfahrens nach einem der Ansprüche 1 bis 10 zum Ermitteln von mindestens drei Radialgeschwindigkeiten (vᵣ) des Distanzsensors (3) jeweils relativ zu den mindestens drei nicht kollinear angeordneten Objekten auf Basis der erfassten Sensordaten (SD) und auf Basis des Doppler-Effekts, zum Ermitteln einer vektoriellen Eigengeschwindigkeit des Distanzsensors (3) auf Basis der mindestens drei ermittelten Radialgeschwindigkeiten des Distanzsensors (3), zum Ermitteln einer aktuellen Orientierung (²T³) des Distanzsensors (3) relativ zu einer Bewegungsrichtung (R) des Schienenfahrzeugs (2) auf Basis der ermittelten vektoriellen Eigengeschwindigkeit (v^{s}) des Distanzsensors (3) und einer vorbekannten vektoriellen Eigengeschwindigkeit (v) des Schienenfahrzeugs (2) zum Vergleichen der aktuellen Orientierung (²T³) des Distanzsensors (3) mit einer Soll-Orientierung (TS) des Distanzsensors (3) des Schienenfahrzeugs (2) und zum Ermitteln einer Dejustierung des Distanzsensors (3) für den Fall, dass die ermittelte aktuelle Orientierung (²T³) des Distanzsensors (3) von der Soll-Orientierung (TS) des Schienenfahrzeugs (2) abweicht, auszuführen.

15. Computerlesbares Speichermedium, umfassend Befehle, die bei der Ausführung durch einen Computer diesen veranlassen, die Schritte des Verfahrens nach einem der Ansprüche 1 bis 10 zum Ermitteln von mindestens drei Radialgeschwindigkeiten (vᵣ) des Distanzsensors (3) jeweils relativ zu den mindestens drei nicht kollinear angeordneten Objekten auf Basis der erfassten Sensordaten (SD) und auf Basis des Doppler-Effekts, zum Ermitteln einer vektoriellen Eigengeschwindigkeit des Distanzsensors (3) auf Basis der mindestens drei ermittelten Radialgeschwindigkeiten des Distanzsensors (3), zum Ermitteln einer aktuellen Orientierung (²T³) des Distanzsensors (3) relativ zu einer Bewegungsrichtung (R) des Schienenfahrzeugs (2) auf Basis der ermittelten vektoriellen Eigengeschwindigkeit (v^{s}) des Distanzsensors (3) und einer vorbekannten vektoriellen Eigengeschwindigkeit (v) des Schienenfahrzeugs (2), zum Vergleichen der aktuellen Orientierung (²T³) des Distanzsensors (3) mit einer Soll-Orientierung (TS) des Distanzsensors (3) des Schienenfahrzeugs (2) und zum Ermitteln einer Dejustierung des Distanzsensors (3) für den Fall, dass die ermittelte aktuelle Orientierung (²T³) des Distanzsensors (3) von der Soll-Orientierung (TS) des Schienenfahrzeugs (2) abweicht, auszuführen.
